# EUROPÄISCHE PATENTSCHRIFT

(11) **EP 4 623 658 B1**
(45) Veröffentlichungstag und Bekanntmachung des Hinweises auf die Patenterteilung: **02.09.2026**
(21) Anmeldenummer: 24166718.7
(22) Anmeldetag: 27.03.2024
(51) Int. Cl.: A01B 59/00, F16C 11/04, F16C 23/04, F16C 25/02, F16C 33/10

(54) **GELENKANORDNUNG FÜR EINEN DREIPUNKT-KRAFTHEBER EINES LANDWIRTSCHAFTLICHEN TRAKTORS**
LINKAGE ASSEMBLY FOR A THREE POINT POWER LIFT OF AN AGRICULTURAL TRACTOR
ENSEMBLE ARTICULATION POUR UN RELEVAGE À TROIS POINTS D'UN TRACTEUR AGRICOLE

(43) Veröffentlichungstag der Anmeldung: 01.10.2025
(73) Patentinhaber: Deere & Company, Moline, IL 61265 (US)
(72) Erfinder: Hingne, Abhijit, Mannheim (DE); Schibel, Achim Roland, Mannheim (DE)
(74) Vertreter: Dehnhardt, Florian Christopher

(56) Entgegenhaltungen:
- US-A1- 2019 327 877
- US-B2- 10 190 627

## Beschreibung

Die Erfindung betrifft eine Gelenkanordnung für einen Dreipunkt-Kraftheber eines landwirtschaftlichen Traktors, umfassend einen traktorfest angelenkten Hubarm, der sich mittels eines Hubwerks heben und senken lässt, und eine mit einem Freiende des Hubarms in einer Lagerstelle verbundene Hubspindel zur Schwenkbetätigung eines Unterlenkers, der eine Kupplungsanordnung zur reversiblen Anbringung einer Anbaugeräteschnittstelle aufweist, wobei an der Hubspindel gegenüberliegende Gabelwangen mit entlang einer Gelenkachse fluchtenden Aufnahmebohrungen ausgebildet sind, durch die ein Haltebolzen hindurchgeführt ist, wie aus der US2019/0327877A1 bekannt.

Im Allgemeinen umfassen Dreipunkt-Kraftheber gängiger Bauart ein hydraulisch betätigbares Hubwerk mit linken und rechten Hubarmen, die in einem oberen Bereich eines Differentialgehäuses eines landwirtschaftlichen Traktors angelenkt sind und sich mittels zugehöriger linker und rechter Hydraulikzylinder heben und senken lassen, sowie linke und rechte Unterlenker, die an unteren Befestigungsstellen des Dreipunkt-Krafthebers vertikalschwenkbar gelagert und über längenverstellbare Hubspindeln mit den Hubarmen bewegungsverbunden sind. Des Weiteren ist ein zentraler Oberlenker vorhanden, der an einer oberen Befestigungsstelle des Dreipunkt-Krafthebers vertikalschwenkbar aufgehängt ist. Sowohl die Unterlenker wie auch der Oberlenker weisen lösbare Kupplungshaken zur Aufnahme komplementärer Kupplungselemente eines daran anzubringenden Anbau- oder Zusatzgeräts auf. Jede der Hubspindeln ist im Bereich einer zugehörigen Lagerstelle mit einem Freiende des Hubarms verbunden, wobei die Lagerstelle üblicherweise durch einen zylindrischen Lagerbolzen gebildet ist, der durch miteinander fluchtende Lagerbohrungen hindurchgeführt ist, die in gegenüberliegenden bzw. parallel zueinander verlaufenden Gabelwangen der Hubspindel sowie in einem von den Gabelwangen umgriffenen Befestigungsauge des Hubarms ausgebildet sind.

Die beim Betrieb des Dreipunkt-Krafthebers an der Lagerstelle auftretenden Hublasten bzw. Bewegungen führen erfahrungsgemäß zu einem erhöhten Verschleiß des zylindrischen Lagerbolzens innerhalb der Lagerbohrungen insbesondere im Bereich des einzelnen Befestigungsauges.

Aufgabe der vorliegenden Erfindung ist es daher, eine Gelenkanordnung der eingangs genannten Art hinsichtlich eines betriebsbedingten Verschleißes der Lagerstelle zu optimieren.

Diese Aufgabe wird durch eine Gelenkanordnung für einen Dreipunkt-Kraftheber eines landwirtschaftlichen Traktors mit den Merkmalen des Patentanspruchs 1 gelöst.

Die Gelenkanordnung für einen Dreipunkt-Kraftheber eines landwirtschaftlichen Traktors umfasst einen traktorfest angelenkten Hubarm, der sich mittels eines Hubwerks heben und senken lässt, und eine mit einem Freiende des Hubarms in einer Lagerstelle verbundene Hubspindel zur Schwenkbetätigung eines Unterlenkers, der eine Kupplungsanordnung zur reversiblen Anbringung einer Anbaugeräteschnittstelle aufweist, wobei an der Hubspindel gegenüberliegende Gabelwangen mit entlang einer Gelenkachse fluchtenden Aufnahmebohrungen ausgebildet sind, durch die ein Haltebolzen hindurchgeführt ist. Hierbei stützt sich eine auf dem Haltebolzen geführte Lagerkugel an einem an dem Haltebolzen ausgebildeten Anschlag derart ab, dass sich die Lagerkugel mittels eines an dem Haltebolzen eingreifenden Befestigungselements gegenüber einer der Gabelwangen drehfest in einer vorgegebenen Kupplungsposition zwischen den Gabelwangen verspannen lässt, wobei die Lagerkugel zur Bildung der Lagerstelle von einer komplementär ausgebildeten Lagerlauffläche innerhalb eines Befestigungsauges des Hubarms aufgenommen ist.

Da sowohl die Lagerkugel wie auch der darin verlaufende Haltebolzen drehfest und damit feststehend gegenüber der Gabelwange verspannt ist, ist der Haltebolzen den an der Lagerstelle auftretenden Bewegungen und damit einem insofern verursachten betriebsbedingten Verschleiß nicht ausgesetzt. Der Haltebolzen dient hier lediglich der Abstützung der an der Lagerstelle auftretenden Hublasten bzw. dem drehfesten Verspannen der Lagerkugel gegenüber der Gabelwange mittels des Befestigungselements. Auch führt die gegenüber der ansonsten üblichen Verwendung eines zylindrischen Lagerbolzens vergrößerte Lagerlauffläche der Lagerkugel zu einem entsprechend verringerten Verschleiß der Lagerstelle.

Bei der Lagerkugel handelt es sich um ein separates Bauteil, das mit möglichst geringem Spiel bzw. formschlüssig auf den vorzugsweise zylindrischen Haltebolzen aufgeschoben ist und sich bei Bedarf durch Entfernen des Befestigungselements und Herausziehen des Haltebolzens aus den in den Gabelwangen vorgesehenen Aufnahmebohrungen abnehmen bzw. austauschen lässt.

Vorteilhafte Weiterbildungen der erfindungsgemäßen Gelenkanordnung gehen aus den Unteransprüchen hervor.

Bevorzugt ist die Lagerlauffläche an einer innerhalb einer Ausnehmung im Befestigungsauge eingesetzten Lagerschale ausgebildet. Die Lagerschale kann in diesem Fall aus einem eigens für den betreffenden Zweck ausgewählten, insbesondere oberflächengehärteten Material bestehen. Die Lagerschale ist mit möglichst geringem Spiel bzw. kraftschlüssig in die Ausnehmung eingesetzt und darin mittels eines abnehmbaren Sicherungsrings befestigt.

Des Weiteren ist es möglich, dass die Lagerkugel über eine zwischenliegende Abstandshülse drehfest mit der Gabelwange verspannt ist. Die Abstandhülse kann in Form einer zylindrischen Verlängerung baulicher Bestandteil der Lagerkugel oder aber als separates Bauteil ausgebildet sein. In montiertem Zustand ist das der Lagerkugel abgewandte Stirnende der Abstandshülse von einer die Aufnahmebohrung umgebenden Stufenbohrung auf der Innenseite der Gabelwange in Presspassung aufgenommen.

An der Abstandshülse können stirnseitig Mittel zur Verdrehsicherung ausgebildet sein, die an der Lagerkugel und/oder einer Innenseite der Gabelwange angreifen. Bei den stirnseitigen Mitteln kann es sich beispielsweise um einen an der Abstandshülse ausgebildeten Kronenrand handeln, der beim Verspannen der Lagerkugel in die angrenzende Oberfläche der Lagerkugel bzw. Gabelwange eingepresst wird und so zu einer entsprechenden Reibwerterhöhung führt.

Typischerweise verläuft die Lagerkugel entsprechend der vorgegebenen Kupplungsposition mittenzentriert zwischen den Gabelwangen, sodass quer zur Gelenkachse auftretende Pendelbewegungen der Hubspindel um die Lagerkugel innerhalb der durch den beidseitigen Abstand zu den Gabelwangen gegebenen Grenzen zugelassen werden. Dies ist insbesondere für den Fall von Bedeutung, dass an den Unterlenkern des Dreipunkt-Krafthebers seitwärts gerichtete Auslenkungen auftreten.

Auch ist es möglich, dass das Befestigungselement von einem durch die Aufnahmebohrung in der Gabelwange hindurchgreifenden Schraubbolzen gebildet ist, der in ein stirnseitig vorgesehenes Innengewinde am Haltebolzen eingeschraubt ist und dessen Kopf sich zum Verspannen der Lagerkugel an einer Außenseite der Gabelwange abstützt. Dazwischen kann eine Unterlegscheibe, zum Beispiel in Gestalt einer die Verschraubung sichernden Schnorrscheibe, vorgesehen sein. Das der Verschraubung gegenüberliegende offene Ende des Haltebolzens stützt sich hierbei radial innerhalb der zugehörigen Aufnahmebohrung in der gegenüberliegenden Gabelwange der Hubspindel ab.

Um ein zur verlässlichen Verdrehsicherung ausreichendes Anzugsmoment aufbauen zu können, kann ferner vorgesehen sein, dass der Haltebolzen auf einer dem Innengewinde abgewandten Seite eine Aufnahme zur Ineingriffnahme eines Werkzeugs zum Gegenhalten beim Verspannen der Lagerkugel mittels des Schraubbolzens aufweist. Bei der Aufnahme kann es sich um einen stirnseitigen Schraubenkopfantrieb in Gestalt eines Inbus oder dergleichen handeln.

Die erfindungsgemäße Gelenkanordnung wird im Folgenden anhand der beigefügten Zeichnungen näher erläutert. Dabei sind übereinstimmende bzw. bezüglich ihrer Funktion vergleichbare Komponenten mit identischen Bezugszeichen gekennzeichnet. Es zeigen:
- Fig. 1: ein im Schnitt dargestelltes Ausführungsbeispiel der erfindungsgemäßen Gelenkanordnung für einen Dreipunkt-Kraftheber eines landwirtschaftlichen Traktors,
- Fig. 2: eine Explosionsdarstellung der in Fig. 1 wiedergegebenen Gelenkanordnung, und
- Fig. 3: ein schematisch wiedergegebener Dreipunkt-Kraftheber gängiger Bauart an einem landwirtschaftlichen Traktor.

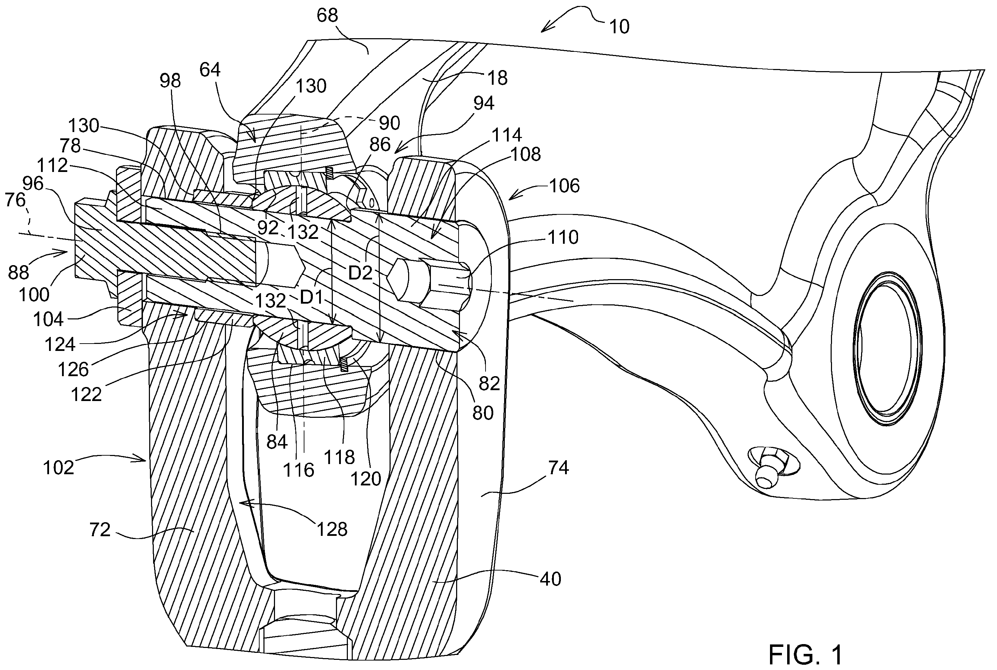

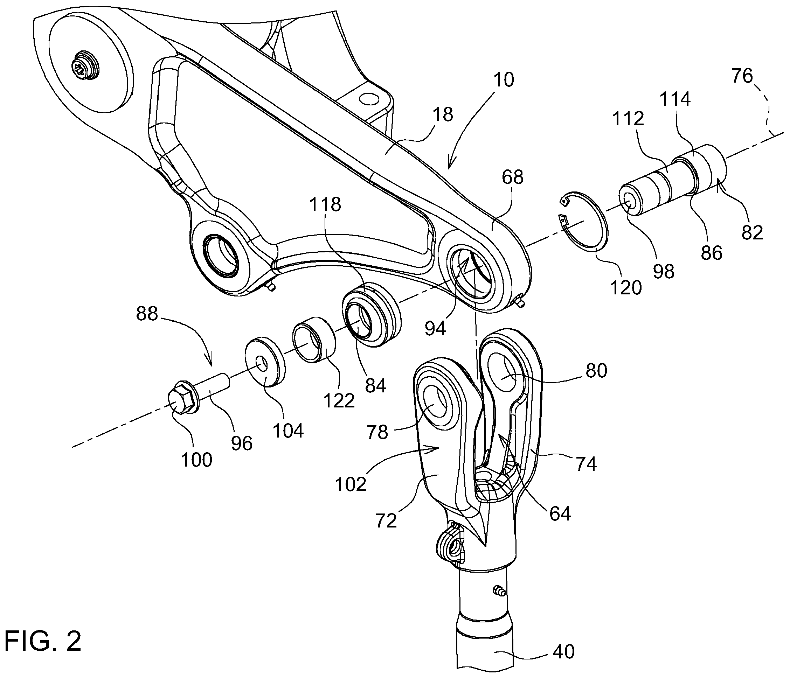

Fig. 1 zeigt ein im Schnitt dargestelltes Ausführungsbeispiel der erfindungsgemäßen Gelenkanordnung für einen Dreipunkt-Kraftheber eines landwirtschaftlichen Traktors, wobei dieses nachfolgend unter gleichzeitiger Bezugnahme auf die Explosionsdarstellung in Fig. 2 beschrieben werden soll.

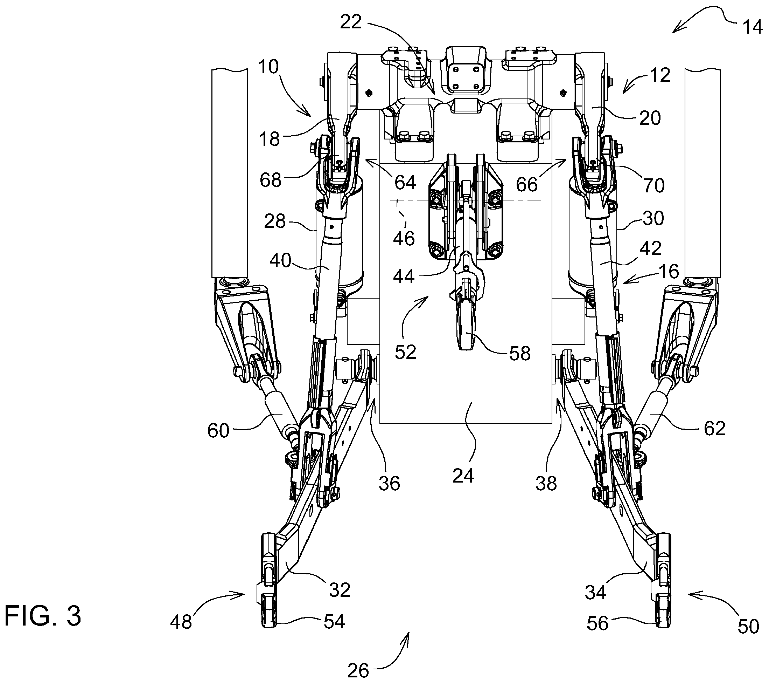

Genauer gesagt sind linke und rechte Gelenkanordnungen 10, 12 vorgesehen, die spiegelsymmetrisch aufgebaut, aber ansonsten identisch sind. Die Gelenkanordnungen 10, 12 sind Bestandteil eines in Fig. 3 beispielhaft wiedergegebenen Dreipunkt-Krafthebers 14 gängiger Bauart.

Der Dreipunkt-Kraftheber 14 umfasst ein hydraulisch betätigbares Hubwerk 16 mit linken und rechten Hubarmen 18, 20, die in einem oberen Bereich 22 eines Differentialgehäuses 24 eines landwirtschaftlichen Traktors 26 angelenkt sind und sich mittels zugehöriger linker und rechter Hydraulikzylinder 28, 30 heben und senken lassen, sowie linke und rechte Unterlenker 32, 34, die an unteren Befestigungsstellen 36, 38 des Dreipunkt-Krafthebers 14 vertikalschwenkbar gelagert und über längenverstellbare Hubspindeln 40, 42 mit den Hubarmen 18, 20 bewegungsverbunden sind. Des Weiteren ist ein zentraler Oberlenker 44 vorhanden, der an einer oberen Befestigungsstelle 46 des Dreipunkt-Krafthebers 14 vertikalschwenkbar aufgehängt ist. Zugehörige Kupplungsanordnungen 48, 50, 52 dienen der reversiblen Anbringung einer in Fig. 3 nicht gezeigten Anbaugeräteschnittstelle. Genauer gesagt handelt es sich bei den Kupplungsanordnungen 48, 50, 52 um an den Unterlenkern 32, 34 sowie dem Oberlenker 44 vorgesehene lösbare Kupplungshaken 54, 56, 58 zur Aufnahme komplementärer Kupplungselemente eines daran anzubringenden Anbau- oder Zusatzgeräts. Linke und rechte Seitenstabilisatoren 60, 62 machen es möglich, seitwärts gerichtete Auslenkungen der Unterlenker 32, 34 zu blockieren (Unterlenkerbetrieb in Mittenstellung), oder aber in gewissem Umfang zuzulassen (Unterlenkerbetrieb in Schwimmstellung). Jede der Hubspindeln 40, 42 ist im Bereich einer zugehörigen Lagerstelle 64, 66 mit einem Freiende 68, 70 des traktorfest angelenkten Hubarms 18, 20 zur Schwenkbetätigung eines jeweiligen der beiden Unterlenker 32, 34 verbunden.

Im Weiteren soll lediglich die linke Gelenkanordnung 10 betrachtet werden. Die nachfolgenden Erläuterungen gelten für die rechte Gelenkanordnung 12 indes entsprechend. Wie in Fig. 2 bzw. 3 zu erkennen ist, sind an der zugehörigen Hubspindel 40 gegenüberliegende bzw. parallel zueinander verlaufende erste und zweite Gabelwangen 72, 74 mit entlang einer (gedachten) Gelenkachse 76 fluchtenden Aufnahmebohrungen 78, 80 ausgebildet. Durch die Aufnahmebohrungen 78, 80 ist ein zylindrischer Haltebolzen 82 hindurchgeführt. Eine auf dem Haltebolzen 82 geführte Lagerkugel 84 stützt sich an einem an dem Haltebolzen 82 ausgebildeten Anschlag 86 derart ab, dass sich die Lagerkugel 84 mittels eines an dem Haltebolzen 82 eingreifenden Befestigungselements 88 gegenüber der ersten Gabelwange 72 drehfest in einer vorgegebenen Kupplungsposition 90 zwischen den beiden Gabelwangen 72, 74 verspannen lässt. Zur Komplettierung der Lagerstelle 64 ist die Lagerkugel 84 von einer komplementär ausgebildeten Lagerlauffläche 92 innerhalb eines Befestigungsauges 94 des Hubarms 18 aufgenommen.

Das Befestigungselement 88 ist von einem durch die Aufnahmebohrung 78 in der ersten Gabelwange 72 hindurchgreifenden Schraubbolzen 96 gebildet, der in ein stirnseitig vorgesehenes Innengewinde 98 am Haltebolzen 82 eingeschraubt ist und dessen Kopf 100 sich zum Verspannen der Lagerkugel 84 an einer Außenseite 102 der ersten Gabelwange 72 abstützt. Dazwischen ist eine Unterlegscheibe 104, zum Beispiel in Gestalt einer die Verschraubung sichernden Schnorrscheibe, vorgesehen. Das der Verschraubung gegenüberliegende offene Ende 106 des Haltebolzens 82 stützt sich hierbei radial innerhalb der zugehörigen Aufnahmebohrung 80 in der zweiten Gabelwange 74 der Hubspindel 40 ab.

Um ein zur verlässlichen Verdrehsicherung ausreichendes Anzugsmoment aufbauen zu können, ist ferner vorgesehen, dass der Haltebolzen 82 auf einer dem Innengewinde 98 abgewandten Seite eine Aufnahme 108 zur Ineingriffnahme eines Werkzeugs zum Gegenhalten beim Verspannen der Lagerkugel 84 mittels des Schraubbolzens 96 aufweist. Bei der Aufnahme 108 handelt es sich um einen stirnseitigen Schraubenkopfantrieb in Gestalt eines Inbus 110.

Des Weiteren weist der Haltebolzen 82 einen ersten Abschnitt 112 mit einem ersten Außendurchmesser D1 sowie einen zweiten Abschnitt 114 mit einem demgegenüber größeren zweiten Außendurchmesser D2 auf. Der erste Abschnitt 112 dient der Aufnahme der am Anschlag 86 anliegenden Lagerkugel 84, wobei der Anschlag 86 vorliegend durch einen stufenförmig umlaufenden Übergang zum zweiten Abschnitt 114 gebildet ist.

Bei der Lagerkugel 84 handelt es sich um ein separates Bauteil, das mit möglichst geringem Spiel bzw. formschlüssig auf den zylindrischen Haltebolzen 82 aufgeschoben ist und sich bei Bedarf durch Entfernen des Schraubbolzens 96 und Herausziehen des Haltebolzens 82 aus den in den beiden Gabelwangen 72, 74 vorgesehenen Aufnahmebohrungen 78, 80 abnehmen bzw. austauschen lässt.

Gemäß Fig. 1 ist die Lagerlauffläche 92 an einer innerhalb einer Ausnehmung 116 im Befestigungsauge 94 eingesetzten Lagerschale 118 ausgebildet. Die Lagerschale 118 besteht in diesem Fall aus einem eigens für den betreffenden Zweck ausgewählten, insbesondere oberflächengehärteten Material. Die Lagerschale 118 ist mit möglichst geringem Spiel bzw. kraftschlüssig in die Ausnehmung 116 eingesetzt und darin mittels eines abnehmbaren Sicherungsrings 120 befestigt.

Die Lagerkugel 84 ist über eine zwischenliegende Abstandshülse 122 drehfest mit der ersten Gabelwange 72 verspannt. Die Abstandhülse 122 kann in Form einer zylindrischen Verlängerung baulicher Bestandteil der Lagerkugel 84 oder aber wie hier als separates Bauteil ausgebildet sein (siehe hierzu Fig. 2). In montiertem Zustand ist das der Lagerkugel 84 abgewandte Stirnende 124 der Abstandshülse 122 von einer die Aufnahmebohrung 78 umgebenden Stufenbohrung 126 auf der Innenseite 128 der ersten Gabelwange 72 in Presspassung aufgenommen.

An der Abstandshülse 122 sind stirnseitig Mittel zur Verdrehsicherung 130 ausgebildet, die an der Lagerkugel 84 und/oder der Innenseite 128 der ersten Gabelwange 72 angreifen. Bei den stirnseitigen Mitteln zur Verdrehsicherung 130 handelt es sich um einen an der Abstandshülse 122 ausgebildeten Kronenrand (nicht gezeigt), der beim Verspannen der Lagerkugel 84 in die angrenzende Oberfläche der Lagerkugel 84 bzw. ersten Gabelwange 72 eingepresst wird und so zu einer entsprechenden Reibwerterhöhung führt.

Entsprechend der vorgegebenen Kupplungsposition 90 verläuft die Lagerkugel 84 mittenzentriert zwischen den beiden Gabelwangen 72, 74, sodass quer zur Gelenkachse 76 auftretende Pendelbewegungen der Hubspindel 40 um die Lagerkugel 84 innerhalb der durch den beidseitigen Abstand gegenüber den beiden Gabelwangen 72, 74 gegebenen Grenzen zugelassen werden. Dies ist insbesondere für den Fall von Bedeutung, dass an den Unterlenkern 32, 34 des Dreipunkt-Krafthebers 14 seitwärts gerichtete Auslenkungen auftreten, also dann, wenn diese in der Schwimmstellung betrieben werden.

Wie ebenfalls in Fig. 1 zu sehen ist, verlaufen durch eine Wandung der Lagerkugel 84 mehrere diametrale Schmierstoffkanäle 132, die es erlauben, der Lagerlauffläche 92 Schmierfett über einen am Hubarm 18 vorgesehenen Schmiernippel (nicht gezeigt) zuzuführen.

Da sowohl die Lagerkugel 84 wie auch der darin verlaufende Haltebolzen 82 drehfest und damit feststehend gegenüber der ersten

Gabelwange 72 verspannt ist, ist letzterer den an der Lagerstelle 64 auftretenden Bewegungen und damit einem insofern verursachten betriebsbedingten Verschleiß nicht länger ausgesetzt. Der Haltebolzen 82 dient hier lediglich der Abstützung der an der Lagerstelle 64 auftretenden Hublasten bzw. dem drehfesten Verspannen der Lagerkugel 84 gegenüber der ersten Gabelwange 72 mittels des Schraubbolzens 96. Auch führt die gegenüber der ansonsten üblichen Verwendung eines zylindrischen Lagerbolzens vergrößerte Lagerlauffläche 92 zu einem entsprechend verringerten Verschleiß der Lagerstelle 64.

## Patentansprüche

1. Gelenkanordnung für einen Dreipunkt-Kraftheber eines landwirtschaftlichen Traktors, umfassend einen traktorfest angelenkten Hubarm (18), der sich mittels eines Hubwerks (16) heben und senken lässt, und eine mit einem Freiende (68) des Hubarms (18) in einer Lagerstelle (64) verbundene Hubspindel (40) zur Schwenkbetätigung eines Unterlenkers (32), der eine Kupplungsanordnung (48) zur reversiblen Anbringung einer Anbaugeräteschnittstelle aufweist, wobei an der Hubspindel (40) gegenüberliegende Gabelwangen (72, 74) mit entlang einer Gelenkachse (76) fluchtenden Aufnahmebohrungen (78, 80) ausgebildet sind, durch die ein Haltebolzen (82) hindurchgeführt ist, **dadurch gekennzeichnet, dass** eine auf dem Haltebolzen (82) geführte Lagerkugel (84) sich an einem an dem Haltebolzen (82) ausgebildeten Anschlag derart abstützt, dass sich die Lagerkugel (84) mittels eines an dem Haltebolzen (82) eingreifenden Befestigungselements (88) gegenüber einer der Gabelwangen (72) drehfest in einer vorgegebenen Kupplungsposition (90) zwischen den Gabelwangen (72, 74) verspannen lässt, wobei die Lagerkugel (84) zur Bildung der Lagerstelle (64) von einer komplementär ausgebildeten Lagerlauffläche (92) innerhalb eines Befestigungsauges (94) des Hubarms (18) aufgenommen ist.

2. Gelenkanordnung nach Anspruch 1, **dadurch gekennzeichnet, dass** die Lagerlauffläche (92) an einer innerhalb einer Ausnehmung (116) im Befestigungsauge (94) eingesetzten Lagerschale (118) ausgebildet ist.

3. Gelenkanordnung nach Anspruch 1 oder 2, **dadurch gekennzeichnet, dass** die Lagerkugel (84) über eine zwischenliegende Abstandshülse (122) drehfest mit der Gabelwange (72) verspannt ist.

4. Gelenkanordnung nach wenigstens einem der vorhergehenden Ansprüche, **dadurch gekennzeichnet, dass** an der Abstandshülse (122) stirnseitig Mittel zur Verdrehsicherung (130) ausgebildet sind, die an der Lagerkugel (84) und/oder einer Innenseite (128) der Gabelwange (72) angreifen.

5. Gelenkanordnung nach wenigstens einem der vorhergehenden Ansprüche, **dadurch gekennzeichnet, dass** die Lagerkugel (84) entsprechend der vorgegebenen Kupplungsposition (90) mittenzentriert zwischen den Gabelwangen (72, 74) verläuft.

6. Gelenkanordnung nach wenigstens einem der vorhergehenden Ansprüche, **dadurch gekennzeichnet, dass** das Befestigungselement (88) von einem durch die Aufnahmebohrung (78) in der Gabelwange (72) hindurchgreifenden Schraubbolzen (96) gebildet ist, der in ein stirnseitig vorgesehenes Innengewinde (98) am Haltebolzen (82) eingeschraubt ist und dessen Kopf (100) sich zum Verspannen der Lagerkugel (84) an einer Außenseite (102) der Gabelwange (72) abstützt.

7. Gelenkanordnung nach Anspruch 6, **dadurch gekennzeichnet, dass** der Haltebolzen (82) auf einer dem Innengewinde (98) abgewandten Seite eine Aufnahme (108) zur Ineingriffnahme eines Werkzeugs zum Gegenhalten beim Verspannen der Lagerkugel (84) mittels des Schraubbolzens (96) aufweist.

## Claims

1. Articulated coupling arrangement for a three-point power lift of an agricultural tractor, comprising a lifting arm (18) articulated in a manner fixed on the tractor, which lifting arm can be raised and lowered by means of a lifting mechanism (16), and a lifting spindle (40) connected to a free end (68) of the lifting arm (18) in a bearing position (64) for pivoting actuation of a lower link (32) which has a coupling arrangement (48) for reversible attachment of an attachment interface, wherein opposing fork cheeks (72, 74) with receiving bores (78, 80) which are flush along a joint axis (76) are formed on the lifting spindle (40), through which receiving bores a retaining bolt (82) is guided, **characterized in that** a bearing ball (84) guided on the retaining bolt (82) is supported on a stop formed on the retaining bolt (82) in such a manner that the bearing ball (84) can be braced by means of a fastening element (88) which engages on the retaining bolt (82) with respect to one of the fork cheeks (72) in a rotationally conjoint manner in a predefined coupling position (90) between the fork cheeks (72, 74), the bearing ball (84) being accommodated within a fastening eye (94) of the lifting arm (18) for the formation of the bearing point (64) of a bearing running surface (92) formed in a complementary manner.

2. Articulated coupling arrangement according to Claim 1, **characterized in that** the bearing running surface (92) is formed on a bearing shell (118) inserted within a recess (116) in the fastening eye (94).

3. Articulated coupling arrangement according to Claim 1 or 2, **characterized in that** the bearing ball (84) is braced in a rotationally conjoint manner with the fork cheek (72) via an intermediate spacer sleeve (122).

4. Articulated coupling arrangement according to at least one of the preceding claims, **characterized in that** means to prevent rotation (130) which engage on the bearing ball (84) and/or an inside (128) of the fork cheek (72) are formed at the end side on the spacer sleeve (122).

5. Articulated coupling arrangement according to at least one of the preceding claims, **characterized in that** the bearing ball (84) runs in accordance with the predefined coupling position (90) centred between the fork cheeks (72, 74).

6. Articulated coupling arrangement according to at least one of the preceding claims, **characterized in that** the fastening element (88) is formed by a threaded bolt (96) which engages through the receiving bore (78) in the fork cheek (72), which is screwed into an internal thread (98) provided at the end side on the retaining bolt (82) and the head (100) of which is supported on an outside (102) of the fork cheek (72) for bracing the bearing ball (84).

7. Articulated coupling arrangement according to Claim 6, **characterized in that** the retaining bolt (82) has, on a side facing away from the internal thread (98), a receptacle (108) for engagement of a tool for resistance during bracing of the bearing ball (84) by means of the threaded bolt (96).

## Revendications

1. Ensemble d'articulation pour un relevage trois points d'un tracteur agricole, comprenant un bras de relevage (18) articulé de manière fixe au tracteur, qui peut être relevé et abaissé au moyen d'un mécanisme de relevage (16), et une broche de relevage (40) reliée à une extrémité libre (68) du bras de relevage (18) au niveau d'un emplacement de palier (64) pour l'actionnement en pivotement d'un bras inférieur (32), lequel présente un ensemble d'attelage (48) destiné à la fixation réversible d'une interface d'outil porté, des joues de fourche opposées (72, 74) étant formées sur la broche de relevage (40), avec des alésages de réception (78, 80) alignés le long d'un axe d'articulation (76), à travers lesquels est passé un boulon de retenue (82), **caractérisé en ce qu'**une rotule de palier (84), guidée sur le boulon de retenue (82), prend appui contre une butée formée sur le boulon de retenue (82) de telle sorte que la rotule de palier (84) peut être serrée entre les joues de fourche (72, 74), sans possibilité de rotation par rapport à l'une des joues de fourche (72), dans une position d'attelage prédéfinie (90), au moyen d'un élément de fixation (88) venant en prise avec le boulon de retenue (82), la rotule de palier (84) étant reçue, pour former l'emplacement de palier (64), par une surface de roulement de palier (92) de forme complémentaire à l'intérieur d'un œil de fixation (94) du bras de relevage (18).

2. Ensemble d'articulation selon la revendication 1, **caractérisé en ce que** la surface de roulement de palier (92) est formée sur une coquille de palier (118) insérée à l'intérieur d'un évidement (116) dans l'œil de fixation (94).

3. Ensemble d'articulation selon la revendication 1 ou 2, **caractérisé en ce que** la rotule de palier (84) est serrée, sans possibilité de rotation, avec la joue de fourche (72) par l'intermédiaire d'une douille d'écartement (122).

4. Ensemble d'articulation selon au moins l'une quelconque des revendications précédentes, **caractérisé en ce que** des moyens antirotation (130) sont formés à l'extrémité frontale de la douille d'écartement (122), lesquels viennent en prise avec la rotule de palier (84) et/ou un côté intérieur (128) de la joue de fourche (72).

5. Ensemble d'articulation selon au moins l'une quelconque des revendications précédentes, **caractérisé en ce que** la rotule de palier (84) est disposée de manière centrée au milieu entre les joues de fourche (72, 74) conformément à la position d'attelage prédéfinie (90).

6. Ensemble d'articulation selon au moins l'une quelconque des revendications précédentes, **caractérisé en ce que** l'élément de fixation (88) est formé par un boulon fileté (96) passant à travers l'alésage de réception (78) dans la joue de fourche (72), lequel est vissé dans un taraudage intérieur (98) prévu à l'extrémité frontale du boulon de retenue (82), et dont la tête (100) prend appui contre un côté extérieur (102) de la joue de fourche (72) afin de serrer la rotule de palier (84).

7. Ensemble d'articulation selon la revendication 6, **caractérisé en ce que** le boulon de retenue (82) présente, sur un côté opposé au taraudage intérieur (98), un logement (108) destiné à recevoir un outil afin d'assurer un contre-maintien lors du serrage de la rotule de palier (84) au moyen du boulon fileté (96).
